# EUROPÄISCHE PATENTSCHRIFT

(11) **EP 2 545 062 B1**
(45) Veröffentlichungstag und Bekanntmachung des Hinweises auf die Patenterteilung: **26.03.2014**
(21) Anmeldenummer: 11704936.1
(22) Anmeldetag: 17.02.2011
(51) Int. Cl.: C07F 9/53

(54) **VERFAHREN ZUR HERSTELLUNG VON TRIS(PERFLUORALKYL)PHOSPHINOXIDEN**
PROCESS FOR PREPARING TRIS(PERFLUOROALKYL)PHOSPHINE OXIDES
PROCÉDÉ DE PRODUCTION D'OXYDES DE TRIS (PERFLUOROALKYLE) PHOSPHINE

(30) Priorität: 11.03.2010 DE 102010011034
(43) Veröffentlichungstag der Anmeldung: 16.01.2013
(73) Patentinhaber: Merck Patent GmbH, 64293 Darmstadt (DE)
(72) Erfinder: IGNATYEV, Nikolai, 47058 Duisburg (DE); WIEBE, Waldemar, 50939 Koeln (DE); WILLNER, Helge, 45481 Muelheim/Ruhr (DE)
(86) Internationale Anmeldenummer: PCT/EP2011/000765
(87) Internationale Veröffentlichungsnummer: WO 2011/110281

(56) Entgegenhaltungen:
- WO-A1-03/087020
- V. YA. SEMENII ET AL.: ZH. OBSHCH. KHIM., Bd. 55, Nr. 12, 19. Januar 2007 (2007-01-19), Seiten 2716-2720, XP2246309, in der Anmeldung erwähnt

## Beschreibung

Die Erfindung betrifft ein Verfahren zur Herstellung von Tris(perfluoralkyl)phosphinoxiden durch Reaktion von Tris(perfluoralkyl)difluorposphoran mit Erdalkalimetalloxiden, Erdalkalimetallcarbonaten, Zinkoxid, Kupfer(I)oxid, Kupfer(II)oxid, Silberoxid, Quecksilber(II)oxid, Cadmiumoxid oder Cadmiumcarbonat. Tris(perfluoralkyl)phosphinoxide sind bekannte Perfluoralkylierungsmittel oder interessante Ausgangsmaterialien für eine Vielzahl interessanter Verbindungen, beispielsweise für die Synthese von Bis(perfluoralkyl)phosphinsäuren, Bis(perfluoralkyl)phosphinaten, Perfluoralkylboraten oder perfluorierten Alkoholen, wie z.B. (C₆H₅)₂C(OH)C₂F₅.

R.C. Paul, J. Chem. Soc., 1955, 574-575 beschreibt beispielsweise die Synthese von Tris(trifluormethyl)phosphinoxid durch Erhitzen von Tris(trifluormethyl)dichlorphosphoran [(CF₃)₃PCl₂] mit einem Überschuss von wasserfreier Oxalsäure. Der Nachteil dieser Synthese ist der relativ schwere Zugang zu Tris(trifluormethyl)dichlorphosphoran.

V. Ya. Semenii et al, Zh. Obshch. Khim, 55, 12, 1985, 2716-2720 beschreibt die Synthese von Tris(perfluoralkyl)phosphinoxiden durch Umsetzung von Difluortris(perfluoralkyl)phosphoranen mit Hexamethyldisiloxan ([(CH₃)₃Si]₂O). Der Nachteil dieser Synthese ist das teure Ausgangsmaterial Hexamethyldisiloxan und die Entstehung des hochentzündlichen Nebenprodukts Trimethylsilylfluorid in doppelt molarer Menge. Bei der Synthese von Tris(pentafluorethyl)phosphinoxid kommt erschwerend hinzu, dass dieses Produkt einen Siedepunkt von 101°C hat und das Ausgangsmaterial Hexamethyldisiloxan einen Siedepunkt von 99-100°C hat. Die destillative Abtrennung auch von geringen Mengen an Ausgangsmaterial ist daher erschwert.

Es ist daher wünschenswert eine wirtschaftlich und großtechnisch umsetzbare Synthese der beschriebenen Phosphinoxide zur Verfügung zu haben, damit diese interessante Klasse der Ausgangsmaterialien oder Perfluoralkylierungsmittel in großen Mengen hergestellt werden können.

Aufgabe der Erfindung ist daher ein verbessertes Verfahren zur Herstellung von Tris(perfluoralkyl)phosphinoxiden zu entwickeln, das den Anforderungen einer großtechnischen wirtschaftlichen Synthese gerecht wird und das die Nachteile des Standes der Technik nicht aufweist.

Diese Aufgabe wird erfindungsgemäß durch die Merkmale des Hauptanspruchs und der nebengeordneten Ansprüche gelöst.

Überraschenderweise wurde gefunden, dass die als Ausgangsstoffe bekannten Tris(perfluoralkyl)difluorphosphorane in der Lage sind, mit Erdalkalimetalloxiden, Erdalkalimetallcarbonaten, Zinkoxid, Kupfer(I)oxid, Kupfer(II)oxid, Silberoxid, Quecksilber(II)oxid, Cadmiumoxid oder Cadmiumcarbonat , die als Feststoffe eingesetzt werden, zu reagieren und die gewünschten Phosphinoxide zu erzielen. Als Nebenprodukte entstehen Erdalkalimetallfluoride, die im Fall von Calciumdifluorid sogar einer natürlich vorkommenden Verbindung entsprechen.

Gegenstand der Erfindung ist daher ein Verfahren zur Herstellung von Verbindungen der Formel (I)

(CₓF₂ₓ₊₁)₃P(O) (I)

wobei x 1, 2, 3, 4, 5, 6, 7, 8, 9, 10, 11 oder 12 ist,
durch Reaktion von Verbindungen der Formel (II)

(CₓF₂₊₁)₃PF₂ (II),

wobei x eine der zuvor angegebenen Bedeutungen hat,
mit Erdalkalimetalloxiden, Erdalkalimetallcarbonaten, Zinkoxid, Kupfer(I)oxid, Kupfer(II)oxid, Silberoxid, Quecksilber(II)oxid, Cadmiumoxid oder Cadmiumcarbonat.

Bevorzugt werden Verbindungen der Formel (I) erfindungsgemäß hergestellt, in denen x 2, 3, 4, 5 oder 6 entspricht. Demzufolge sind Ausgangsmaterialien der Formel (II) bevorzugt, wobei x 2, 3, 4, 5 oder 6 bedeutet.

Ein Gegenstand der Erfindung ist daher auch das Verfahren, wie zuvor beschrieben, dadurch gekennzeichnet, dass Verbindungen der Formel (II) eingesetzt werden, wobei x 2, 3, 4, 5 oder 6 bedeutet.

Besonders bevorzugt werden Verbindungen der Formel (I) erfindungsgemäß hergestellt, wobei x 2, 4 oder 6 bedeutet, ganz besonders bevorzugt werden Tris(pentafluorethyl)phosphinoxid oder Tris(nonafluorbutyl)phosphinoxid hergestellt.

Als Nebenprodukt zu den Verbindungen der Formel (I), wie zuvor beschrieben, entstehen die Metallfluoride der Erdalkalimetalle, Zink, Kupfer, Silber, Quecksilber oder Cadmium. Man kann das erfindungsgemäße Verfahren daher auch als ein Verfahren zur Herstellung von Metallfluoriden der Erdalkalimetalle, Zink, Kupfer, Silber, Quecksilber oder Cadmium verstehen. Insbesondere können durch dieses erfindungsgemäße Verfahren wasserfreie Metallfluoride hergestellt werden, sofern in der Reaktion wasserfreie Metalloxide oder Metallcarbonate verwendet werden.

Die Verbindungen der Formel (II) sind komerziell erhältlich oder können nach bekannten Verfahren hergestellt werden, die dem Fachmann geläufig sind.

Verbindungen der Formel (II) können beispielsweise durch elektrochemische Fluorierung geeigneter Ausgangsverbindungen hergestellt werden, wie in V. Ya. Semenii et al, Zh. Obshch. Khim., 55, 12, 1985, 2716-2720, N. Ignatiev et al, J. of Fluorine Chem., 103, 2000, 57-61 sowie der WO 00/21969 beschrieben. Die entsprechenden Beschreibungen werden hiermit als Referenz eingeführt und gelten als Teil der Offenbarung.

Perfluoralkylfluorphosphorane können beispielsweise auch ausgehend von elementarem Phosphor und Perfluoralkyliodiden hergestellt werden, basierend auf der Beschreibung von F.W. Bennett et al, J. Chem. Soc., 1953, 1565-1571 und M. Görg et al, J. Fluorine Chem., 1996, 79, 103-104.

Bevorzugte Verbindungen der Formel (II) werden ausgewählt aus
Tris(pentafluorethyl)difluorphosphoran,
Tris(heptafluorpropyl)difluorphosphoran,
Tris(nonafluorbutyl)difiuorphosphoran,
Tris(undecafluorpentyl)difluorphosphoran,
Tris(tridecafluorhexyl)difluorphosphoran.

Prinzipiell können alle Erdalkalimetalloxide oder Erdalkalimetallcarbonate in dem erfindungsgemäßen Verfahren eingesetzt werden. Erdalkalimetalle sind bekanntlich Magnesium, Calcium, Strontium und Barium. Wirtschaftlich interessante Erdalkalimetalloxide oder Erdalkalimetallcarbonate sind beispielsweise Calciumoxid (CaO), Calciumcarbonat (CaCO₃), Magnesiumoxid (MgO) oder Bariumcarbonat (BaCO₃). Die genannten Metalloxide- oder Metallcarbonate, wie zuvor beschrieben, können in equimolarer Menge oder bis zum doppelten Überschuss verwendet werden. Werden Metallfluoride als Zielprodukte hergestellt, verwendet man vorzugsweise die Perfluoralkylphosphorane der Formel (II) in einem Überschuss bis maximal 10 mol-% zu den entsprechenden Metalloxiden oder Metallcarbonaten.

Für die Synthese der Verbindungen der Formel (I), wie zuvor beschrieben, ist eine Ausführungsform der Erfindung bevorzugt, bei der Erdalkalimetalloxide oder Erdalkalimetallcarbonate eingesetzt werden. Ein Gegenstand der Erfindung ist daher ein Verfahren, wie zuvor beschrieben, dadurch gekennzeichnet, dass Erdalkalimetalloxide oder Erdalkalimetallcarbonate verwendet werden. Bevorzugt werden diese ausgewählt aus CaO, CaCO₃, MgO oder BaCO₃.

Ganz besonders bevorzugt wird Calciumoxid verwendet.

Die im erfindungsgemäßen Verfahren eingesetzten Feststoffe sollten vorzugsweise in vermahlenem Zustand eingesetzt werden, damit eine möglichst große Oberfläche zur Reaktion vorhanden ist.

Jede Art der Vermahlung ist möglich, beispielsweise die Vermahlung mittels einer Kugelmühle.

Eine andere Alternative ist die Verwendung von Metalloxiden in Form feiner Partikel mit einem Durchmesser von 10 nm bis 0.1 mm, die vorzugsweise frisch hergestellt in dem erfindungsgemäßen Verfahren eingesetzt werden. Die Herstellung derartig hochaktiver Metalloxide aus entsprechenden Precursormaterialien ist dem Fachmann bekannt und kann nach Methoden erfolgen, die in der Literatur bekannt sind. Beispielsweise können derartige hochaktiven Metalloxide durch Sol-Gel-Verfahren hergestellt werden, in denen eine geeignete Precursorverbindung, beispielsweise ein entsprechendes Metallacetat in Alkohol oder einem Alkohol-WasserGemisch hydrolysiert wird.

Im Falle der Erdalkalimetalloxide oder Erdalkalimetallcarbonate ist es bevorzugt, die Feststoffe vorher zu trocknen. In der Regel wird jedoch ein Anteil von maximal 10 mol-% Wasser in dem erfindungsgemäßen Verfahren toleriert. In Ausnahmefällen, wie beispielsweise bei Einsatz von Kupfer(I)oxid, führt der beschriebene Anteil von Wasser sogar zu einer Beschleunigung der Reaktion.

Die Reaktion kann grundsätzlich bei Temperaturen zwischen 15°C und 200°C stattfinden. Werden niedrige Reaktionstemperaturen gewählt, so ist die entsprechende Reaktionszeit länger.
Ein Gegenstand der Erfindung ist daher auch ein Verfahren, wie zuvor beschrieben, dadurch gekennzeichnet, dass die Reaktion bei Temperaturen zwischen 15°C und 200°C stattfindet.

Bevorzugt wird bei Raumtemperatur gearbeitet, wenn lange Reaktionszeiten in der Größenordnung von Tagen gewünscht sind.

Bevorzugt erfolgt die Umsetzung bei Reaktionstemperaturen von 50°C bis 150°C, besonders bevorzugt bei Reaktionstemperaturen von 70°C bis 130°C.

Die Temperaturangaben des Beispielteils beziehen sich hierbei auf die Reaktionstemperatur des verwendeten Heizmediums.

Die Reaktion kann in einer Glasapparatur oder in einer Apparatur aus Kunststoff (wie z.B. Teflon) oder Stahl durchgeführt werden.
Die Reaktion in der Kunststoffapparatur oder in der Stahlapparatur dauert in der Regel länger
Bevorzugt wird ohne Lösungsmittel gearbeitet. Es ist jedoch auch möglich, in Gegenwart von Lösungsmitteln zu arbeiten, die inert gegenüber den Verbindungen der Formel (I) und (II) sind, beispielsweise Dialkylether mit Alkylgruppen von 2 bis 4 C-Atomen, beispielsweise Diethylether, Diisopropylether, Dipropylether, Dibutylether.
Die entstehenden Metallfluoride sind nahezu unlöslich und können beispielsweise einfach durch Filtration oder Dekantation abgetrennt werden.

Die Verbindungen der Formel (I) können jedoch auch durch Kondensation oder Destillation von den entstehenden Metallfluoriden abgetrennt werden, wie im Beispielteil beschrieben.

Die nach dem erfindungsgemäßen Verfahren hergestellten Verbindungen der Formel (I), wie zuvor beschrieben, sind reine Verbindungen und eignen sich in idealer Weiser zur weiteren Umsetzung, insbesondere zur Hydrolyse mit Wasser zur Herstellung von Bis(perfluoralkyl)phosphinsäuren und/oder Perfluoroalkylphosphonsäuren.
Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele:

Die NMR-Spektren wurden bei Raumtemperatur (20 - 25°C) mit den Spektrometern **BRUKER AVANCE 250** (Beispiele: 1 und 3) und **BRUKER AVANCE 400** (Beispiele: 2,4 und 5) der Firma Bruker Analytische Messtechnik AG, mit einem 5 mm Breitbandkopf ¹H/BB mit Deuterium Lock gemessen, falls nicht in den Beispielen geändert angegeben. Die Messfrequenzen der untersuchten Kerne für **AVANCE 250** sind: ¹H: 250,13 MHz; ¹³C: 62,90 MHz; ¹⁹F: 235,36 MHz; ³¹P: 101,26 MHz. Die Messfrequenzen der untersuchten Kerne für **AVANCE 400** sind: ¹H: 400,13 MHz; ¹³C: 100,61 MHz; ¹⁹F: 376,50 MHz; ³¹P: 162,00 MHz.
Die Methode der Referenzierung wird bei jedem Spektrum bzw. bei jedem Datensatz separat angegeben.

### Verwendete Chemikalien:

| Chemikalie | Hersteller | Artikelbestell-Nr. |
|---|---|---|
| CaO, 98 % | Sigma-Aldrich | 24856-8 |
| CaO aus Marmor, kleine Stücke, DAB 6 | Merck | 1.02109.1000 |
| MgO zur Analyse | Merck | 1.05865.0100 |
| CaCO₃ gefällt zur Analyse | Merck | 1.02066.1000 |
| BaCO₃ zur Analyse | Merck | 1.01711.1000 |

Tris(pentafluoroethyl)difluorophosphoran und Tris(nonafluorobutyl)-difluorophosphoran werden hergestellt wie in WO 00/21969 beschrieben.

Magnesiumoxid wird vor Verwendung in der erfindungsgemäßen Reaktion im Vakuum bei 125°C getrocknet, beispielsweise für 20 Stunden.

### Beispiel 1: Tris(pentafluorethyl)phosphinoxid, (C₂F₅)₃P=O

### A.

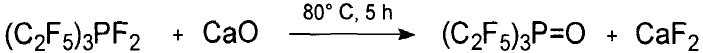

7.85 g (140 mmol) fein vermahlenes Calciumoxid-Pulver (CaO) werden in einer Glasapparatur vorgelegt und 59.6 g (139.9 mmol) Tris(pentafluorethyl)-difluorophosphoran, (C₂F₅)₃PF₂, werden bei Raumtemperatur und unter Rühren mit einem magnetischem Rührer zugegeben. Die Reaktionsmischung wird unter Rühren auf 80° C (Temperatur des Ölbads) für 5 Stunden erhitzt. Anschließend wird das Produkt, (C₂F₅)₃P=O, im Vakuum in eine Kühlfalle kondensiert. Man erhält 50.3 g einer farblosen Flüssigkeit. Die Ausbeute an Tris(pentafluorethyl)phosphinoxid entspricht 89 %, kalkuliert von der Menge an Tris(pentafluorethyl)difluorophosphoran.

Die NMR-Spektren wurden ohne Lösungsmittel für die reine Substanz gemessen.
¹⁹F NMR (Reinsubstanz; Lock: Aceton-d₆ - Film; Referenzsubstanz: CCl₃F), δ, ppm: -82.8 s (9F, 3CF₃), -120.3 d (6F, 3CF₂), ²*J*_{P,F} = 84 Hz.

³¹P NMR (Reinsubstanz; Lock: Aceton-d₆ - Film; Referenzsubstanz: 85 % H₃PO₄), δ, ppm: 19.4 sept, ²*J*_{P,F} = 84 Hz.

### B.

1.05 g (18.7 mmol) fein vermahlenes Calciumoxid-Pulver (CaO) werden in einer Glasapparatur vorgelegt und 1.96 g (4.6 mmol) Tris(pentafluorethyl)-difluorophosphoran, (C₂F₅)₃PF₂, werden bei Raumtemperatur und unter Rühren mit einem magnetischen Rührer zugegeben. Die Reaktionsmischung wird 2 Tage bei Raumtemperatur gerührt. Anschließend wird das Produkt, (C₂F₅)₃P=O, im Vakuum in eine Kühlfalle kondensiert. Man erhält 1.48 g einer farblosen Flüssigkeit. Die Ausbeute an Tris(pentafluorethyl)phosphinoxid entspricht 80 %, kalkuliert von der Menge an Tris(pentafluorethyl)difluorophosphoran.

Die NMR-Spektren sind identisch zu denen des Produkts aus Beispiel 1A.

### Beispiel 2: Tris(pentafluorethyl)phosphinoxid, (C₂F₅)₃P=O

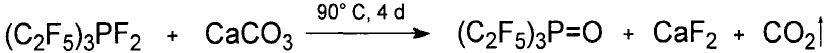

4.97 g (49.7 mmol) Calciumcarbonat (CaCO₃) werden in einer Glasapparatur vorgelegt und 19.88 g (46.7 mmol) Tris(pentafluorethyl)difluorophosphoran, (C₂F₅)₃PF₂, werden bei Raumtemperatur und unter Rühren mit einem magnetischen Rührer zugegeben. Die Reaktionsmischung wird unter Rühren auf 90° C (Temperatur des Ölbads) für 4 Tage erhitzt. Anschließend wird das Produkt, (C₂F₅)₃P=O, im Vakuum in eine Kühlfalle kondensiert. Man erhält 17.4 g einer farblosen Flüssigkeit. Die Ausbeute an Tris(pentafluorethyl)phosphinoxid entspricht 92 %, kalkuliert von der Menge an Tris(pentafluorethyl)difluorophosphoran.

Die NMR-Spektren sind identisch zu denen des Produkts aus Beispiel 1A.

### Beispiel 3: Tris(pentafluorethyl)phosphinoxid, (C₂F₅)₃P=O

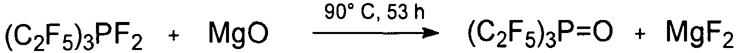

1.89 g (46.9 mmol) Magnesiumoxid (MgO, vorbehandelt, wie zuvor beschrieben) werden in einer Glasapparatur vorgelegt und 20.26 g (47.6 mmol) Tris(pentafluorethyl)difluorophosphoran, (C₂F₅)₃PF₂, werden bei Raumtemperatur und unter Rühren mit einem magnetischen Rührer zugegeben. Die Reaktionsmischung wird unter Rühren auf 90° C (Temperatur des Ölbads) für 53 Stunden erhitzt. Anschließend wird die Flüssigkeit im Vakuum in eine Kühlfalle kondensiert. Man erhält 19.3 g einer farblosen Flüssigkeit, die zu 85% aus Produkt, (C₂F₅)₃P=O besteht und zu 15% aus Tris(pentafluorethyl)difluorphosphoran besteht. Die beiden Verbindungen können destillativ getrennt werden und das erhaltene Ausgangsmaterial kann wieder verwendet werden.

### Beispiel 4: Tris(pentafluorethyl)phosphinoxid, (C₂F₅)₃P=O

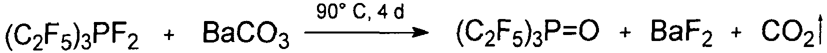

5.07 g (25.7 mmol) Bariumcarbonat 10.48 g (24.6 mmol) werden in einer Glasapparatur vorgelegt und Tris(pentafluorethyl)difluorophosphoran, (C₂F₅)₃PF₂, werden bei Raumtemperatur und unter Rühren mit einem magnetischem Rührer zugegeben. Die Reaktionsmischung wird unter Rühren auf 90° C (Temperatur des Ölbads) für 4 Tage erhitzt. Anschließend wird die Flüssigkeit im Vakuum in eine Kühlfalle kondensiert. Man erhält 8.58 g einer farblosen Flüssigkeit, die zu 51 % aus Produkt,

(C₂F₅)₃P=O besteht und zu 49% aus Tris(pentafluorethyl)difluorphosphoran besteht. Die beiden Verbindungen können destillativ getrennt werden und das erhaltene Ausgangsmaterial kann wieder verwendet werden.

### Beispiel 5: Tris(nonafluorbutyl)phosphinoxid, (C₄F₉)₃P=O

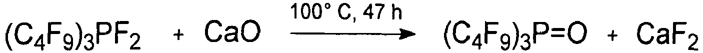

2.0 g (35.2 mmol) fein vermahlenes Calciumoxid-Pulver (CaO) werden in einer Glasapparatur vorgelegt und 21.2 g (29.2 mmol) Tris(nonafluorbutyl)-difluorophosphoran, (C₄F₉)₃PF₂, werden bei Raumtemperatur und unter Rühren mit einem magnetischem Rührer zugegeben. Die Reaktionsmischung wird unter Rühren auf 100° C (Temperatur des Ölbads) für 47 Stunden erhitzt. Anschließend wird das Produkt, (C₄F₉)₃P=O, im Vakuum abdestilliert (Siedepunkt 68°C bei 5.5 mbar). Man erhält 20.1 g einer farblosen Flüssigkeit. Die Ausbeute an Tris(nonafluorbutyl)phosphinoxid entspricht 98 %, kalkuliert von der Menge an Tris(nonafluorbutyl)difluorophosphoran.

Die NMR-Spektren wurden ohne Lösungsmittel fur reine Substsaz gemessen.

¹⁹F NMR (Reinsubstanz; Lock: D₂O-Film; Referenzsubstanz: CCl₃F), δ, ppm: -83.8 m (9F, 3CF₃), -114.2 d,m (6F, 3CF₂), -120.5 m (6F, 3CF₂),-128.2 m (6F, 3CF₂), ²*J*_{P,F} = 85 Hz.

³¹P NMR (Reinsubstanz; Lock: D₂O-Film; Referenzsubstanz: 85 % H₃PO₄), δ, ppm: 22.7 sept, ²*J*_{P,F} = 85 Hz.

## Patentansprüche

1. Verfahren zur Herstellung von Verbindungen der Formel (I)
(CₓF₂ₓ₊₁)₃P(O) (I),
wobei x 1, 2, 3, 4, 5, 6, 7, 8, 9, 10, 11 oder 12 ist,
durch Reaktion von Verbindungen der Formel (II)
(CₓF₂ₓ₊₁)₃PF₂ (II),
wobei x eine der zuvor angegebenen Bedeutungen hat,
mit Erdalkalimetalloxiden, Erdalkalimetallcarbonaten, Zinkoxid, Kupfer(I)oxid, Kupfer(II)oxid, Silberoxid, Quecksilber(II)oxid, Cadmiumoxid oder Cadmiumcarbonat.

2. Verfahren nach Anspruch 1, **dadurch gekennzeichnet, dass** Verbindungen der Formel (II) eingesetzt werden, wobei x 2, 3, 4, 5 oder 6 bedeutet.

3. Verfahren nach Anspruch 1 oder 2, **dadurch gekennzeichnet, dass** Erdalkalimetalloxide oder Erdalkalimetallcarbonate ausgewählt werden.

4. Verfahren nach Anspruch 3, **dadurch gekennzeichnet, dass** CaO, CaCO₃, MgO oder BaCO₃ verwendet wird.

5. Verfahren nach einem oder mehreren der Ansprüche 1 bis 4, **dadurch gekennzeichnet, dass** die Reaktion bei Temperaturen zwischen 15°C und 200°C stattfindet.

## Claims

1. Process for the preparation of compounds of the formula (I)
(CₓF₂ₓ₊₁)₃P(O) (I),
where x is 1, 2, 3, 4, 5, 6, 7, 8, 9, 10, 11 or 12,
by reaction of compounds of the formula (II)
(CₓF₂ₓ₊₁)₃PF₂ (II),
where x has one of the meanings indicated above,
with alkaline-earth metal oxides, alkaline-earth metal carbonates, zinc oxide, copper(I) oxide, copper(II) oxide, silver oxide, mercury(II) oxide, cadmium oxide or cadmium carbonate.

2. Process according to Claim 1, **characterised in that** compounds of the formula (II) in which x denotes 2, 3, 4, 5 or 6 are employed.

3. Process according to Claim 1 or 2, **characterised in that** alkaline-earth metal oxides or alkaline-earth metal carbonates are selected.

4. Process according to Claim 3, **characterised in that** CaO, CaCO₃, MgO or BaCO₃ is used.

5. Process according to one or more of Claims 1 to 4, **characterised in that** the reaction takes place at temperatures between 15°C and 200°C.

## Revendications

1. Procédé de préparation de composés de formule (I)
(CₓF₂ₓ₊₁)₃P(O) (I),
dans laquelle x vaut 1, 2, 3, 4, 5, 6, 7, 8, 9, 10, 11 ou 12,
par la réaction de composés de formule (II)
(CₓF₂ₓ₊₁)₃PF₂ (II),
dans laquelle x revêt l'une des significations indiquées ci-dessus, avec des oxydes de métaux alcalino-terreux, des carbonates de métaux alcalino-terreux, de l'oxyde de zinc, de l'oxyde de cuivre (I), de l'oxyde de cuivre (II), de l'oxyde d'argent, de l'oxyde de mercure (II), de l'oxyde de cadmium ou du carbonate de cadmium.

2. Procédé selon la revendication 1, **caractérisé en ce que** l'on emploie des composés de formule (II) dans laquelle x désigne 2, 3, 4, 5 ou 6.

3. Procédé selon la revendication 1 ou 2, **caractérisé en ce que** l'on sélectionne des oxydes de métaux alcalino-terreux ou des carbonates de métaux alcalino-terreux.

4. Procédé selon la revendication 3, **caractérisé en ce que** l'on utilise du CaO, CaCO₃, MgO ou BaCO₃.

5. Procédé selon l'une ou plusieurs parmi les revendications 1 à 4, **caractérisé en ce que** la réaction a lieu à des températures comprises entre 15°C et 200°C.
